# EUROPÄISCHE PATENTSCHRIFT

(11) **EP 0 882 481 B1**
(45) Veröffentlichungstag und Bekanntmachung des Hinweises auf die Patenterteilung: **24.04.2002**
(21) Anmeldenummer: 97810353.9
(22) Anmeldetag: 05.06.1997
(51) Int. Cl.: B01D 3/20, B01D 3/00

(54) **Ablaufschacht zu einer Bodenkolonne**
Discharge pipe for a plate column
Tube de retour pour une colonne à plateaux

(43) Veröffentlichungstag der Anmeldung: 09.12.1998
(73) Patentinhaber: Sulzer Chemtech AG, 8404 Winterthur (CH)
(72) Erfinder: Gerla, Johannes, Dr., 8408 Winterthur (CH); van Westendorp, Henk Bert, 6662 JG Elst (Gld) (NL)
(74) Vertreter: Sulzer Management AG

(56) Entgegenhaltungen:
- EP-A- 0 501 615
- DE-A- 2 140 899
- DE-C- 973 623
- NL-A- 6 914 633
- US-A- 3 937 769
- US-A- 4 557 877
- US-A- 5 098 615
- US-A- 5 209 875

## Beschreibung

Die Erfindung betrifft einen Ablaufschacht zu einer Bodenkolonne gemäss Oberbegriff von Anspruch 1 sowie Bodenkolonnen mit derartigen Ablaufschächten.

Einen derartigen Ablaufschacht, eine sogenannte "Wirbelflüssigkeitsabfuhrvorrichtung", offenbart die DE-A 2 140 899; in diesem Schacht wird die abgeführte Flüssigkeit in eine Wirbelbewegung versetzt. In einem Ablaufschacht strömt der Rücklauf von einem Boden ("Dampf/Flüssigkeit-Kontaktteller") auf den nächsttieferen. Mitgerissenes Gas (oder Dampf) muss im Ablaufschacht von dem Rücklauf getrennt werden. Bei der genannten Vorrichtung wird durch Leitschaufeln das in den Schacht einströmende Flüssigkeit/Gas-Gemisch so geführt, dass dank der entstehenden Wirbelbewegung und aufgrund der Zentrifugalkraft der Trennvorgang beschleunigt wird. Eine Tasse, die den unteren Abschluss des Schachtes bildet und die mit einem Abstand über dem nächsttieferen Boden angeordnet ist, lässt die aus dem Schacht abströmende Flüssigkeit aufstauen, so dass ein Kurzschlussstrom des Gases durch den Schacht unterbunden wird.

Aufgabe der vorliegenden Erfindung ist es, den bekannten Ablaufschacht derart weiterzubilden, dass die Böden eine verbesserte Wirkung, d.h. einen vergösserten Stoffaustausch, ergeben. Diese Aufgabe wird durch den in Anspruch 1 definierten Ablaufschacht gelöst.

Der erfindungsgemässe Ablaufschacht zu einer Bodenkolonne, welcher bezüglich einer in Kolonnenrichtung weisenden Achse weitgehend zentralsymmetrisch ausgebildet ist, umfasst: a) eine Ablauföffnung, die sich innerhalb eines Überlaufwehrs befindet und die Umlenkelemente für ein zuströmendes Flüssigkeit/Gas-Gemisch zur Ausbildung einer Zirkularströmung enthält; b) einen nach unten führender Durchgangsteil; und c) eine für das Aufstauen von abfliessender Flüssigkeit vorgesehenen Tasse an dem unteren Ende des Durchgangsteils. Die Tasse enthält eine Mehrzahl von Durchbrüchen, die derart ausgelegt und angeordnet sind, dass sich eine weitgehend gleichmässige Verteilung der abfliessenden Flüssigkeit ergibt.

Bei dem bekannten Ablaufschacht ist nur ein kleines Loch im Boden der Tasse vorgesehen, damit bei einem Betriebsunterbruch die Tasse vollständig entleerbar ist. Der überwiegende Teil der durch den Schacht abfliessenden Flüssigkeit ergiesst sich über den oberen Rand der Tasse. Aufgrund dieser Weiterleitung der Flüssigkeit ergibt sich unter der Tasse ein ungünstiger "Schattenbereich": Durch den Impuls der weitergeleiteten Flüssigkeit wird aus diesem Bereich Flüssigkeit wegbewegt, so dass dort einerseits der Flüssigkeitsspiegel abgesenkt ist und andererseits die Flüssigkeit nur langsam erneuert wird. Aufgrund des abgesenkten Flüssigkeitsspiegels bietet der "Schattenbereich" der aufsteigenden Gasströmung weniger Widerstand, so dass eine ungleichmässige Gasströmung entsteht und damit die Wirkungsweise des Bodens verschlechtert wird. Aufgrund der langsamen Erneuerung liefert der "Schattenbereich" praktisch keinen Beitrag zum Stoffaustausch. Bei dem erfindungsgemässen Ablaufschacht liegen diese Mängel nicht vor. Die durch die Durchbrüche im Tassenboden abfliessende Flüssigkeit sorgt im "Schattenbereich" für einen wirkungsvollen Austausch der Flüssigkeit und für einen erhöhten Widerstand gegen die aufsteigende Gasströmung.

Die abhängigen Ansprüche 2 bis 7 beziehen sich auf vorteilhafte Ausführungsformen des erfindungsgemässen Ablaufschachts. Die Ansprüche 8 bis 10 betreffen Bodenkolonnen mit solchen Ablaufschächten.

Nachfolgend wird die Erfindung anhand der Zeichnungen erläutert. Es zeigen:
- Fig. 1: einen Kolonnenboden mit erfindungsgemässen Ablaufschächten,
- Fig. 2: ausschnittsweise einen Längsschnitt durch eine Kolonne, zwei Böden umfassend,
- Fig. 3: eine Draufsicht auf den Boden gemäss Fig.1,
- Fig. 4: den oberen Teil eines erfindungsgemässen Ablaufschachts,
- Fig.5a,b: eine besondere Anordnung von Ablaufschächten zweier benachbarter Böden und
- Fig.6-10: diverse Ausführungsformen der unteren Abschlüsse von erfindungsgemässen Ablaufschächten.

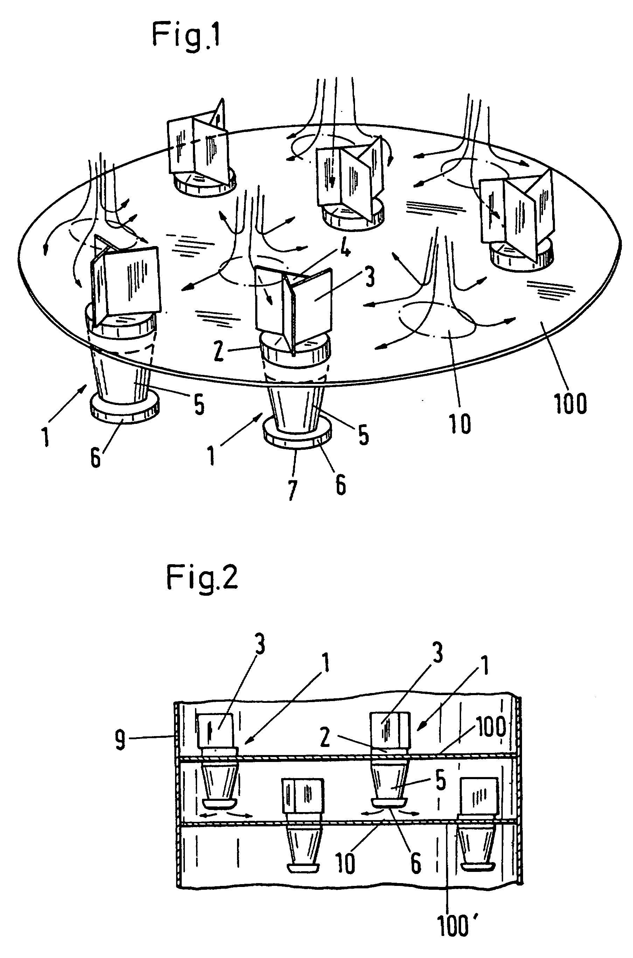

Der in Fig.1 gezeigte Boden 100 weist fünf Ablaufschächte 1 auf. Die strichpunktiert dargestellten Flächen 10 sind die Zulaufstellen, an denen der Rücklauf des benachbarten Bodens auf den Boden 100 auftrifft. Die Pfeile geben die Fliessrichtungen der weiterströmenden Flüssigkeit an. Durch nicht dargestellte Gasdurchtrittsöffnungen (Durchlochungen, Ventile, Glocken) dringt von unten her ein Gas oder Dampf in die Flüssigkeit, so dass ein Stoffund Wärmeaustausch stattfinden kann. Das vorübergehend in der Flüssigkeit enthaltene Gas bildet mit dieser zusammen ein Flüssigkeit/Gas-Gemisch.

Der Ablaufschacht 1 ist bezüglich einer Achse, die in Kolonnenrichtung weist, weitgehend zentralsymmetrisch ausgebildet. Jeder Ablauf umfasst ein Überlaufwehr 2, eine Ablauföffnung 20 und Umlenkelemente 3 für das zuströmende Flüssigkeit/Gas-Gemisch. Zwischen den Umlenkelementen 3 befindet sich ein Kamin 4, durch den aus dem Gemisch abgetrenntes Gas nach oben abströmen kann. Die Trennung von Gas und Flüssigkeit findet in einem nach unten sich verjüngenden Durchgangsteil 5 des Ablaufs 2 statt. Eine für das Aufstauen der abfliessenden Flüssigkeit vorgesehene Tasse 6 bildet einen unteren Abschluss des Ablaufschachts 1. Erfindungsgemäss enthält die Tasse 6 eine Mehrzahl von Durchbrüchen 7, die derart ausgelegt und angeordnet sind, dass sich eine weitgehend gleichmässige Verteilung der durch den Ablaufschacht 1 abfliessenden Flüssigkeit ergibt. Die Auslegung muss so durchgeführt sein, dass die Verteilung über den gesamten Lastbereich gleichmässig ist und dass bei einer minimalen Betriebslast die Flüssigkeit durch die Tasse 6 genügend hoch aufgestaut ist, so dass eine Kurzschlussströmung des Gases durch den Schacht 1 unterbleibt. Die Tasse 6 kann ein durch Tiefziehen erzeugtes Gefäss sein, über dessen Boden die Durchbrüche regelmässig verteilt sind.

Fig.2 zeigt die versetzte Anordnung der Ablaufschächte 1 zweier benachbarter Böden 100, 100' einer Kolonne 9. Zwischen der Tasse 6 und dem darunterliegenden Boden 100' besteht ein Abstand, dank dem auch der unter der Tasse liegende Bereich 10 für den Stoffaustausch nutzbar wird.

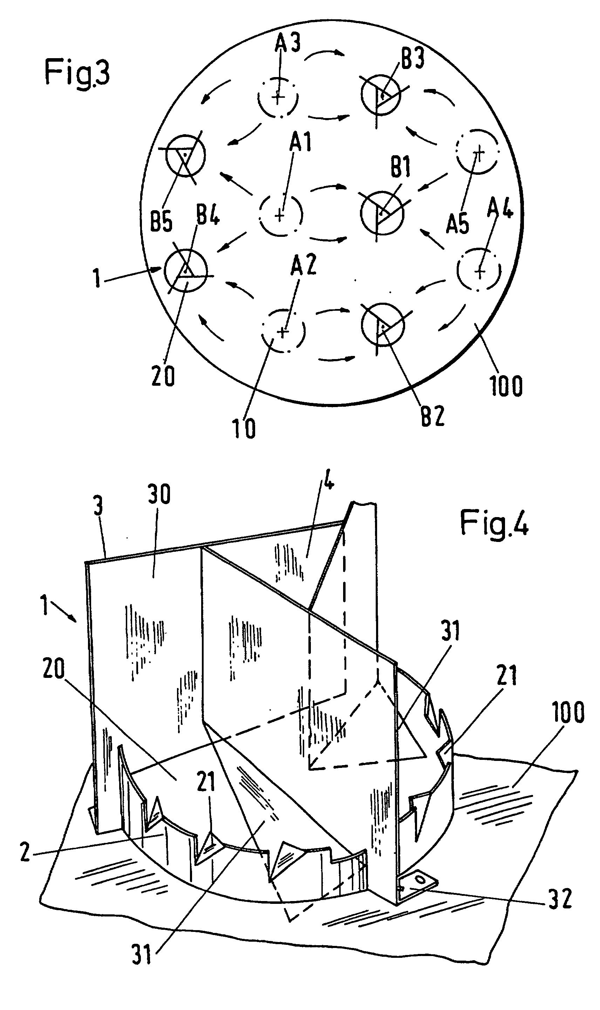

Wie Fig.3 zeigt, sind die Schächte so verteilt, dass die Mittelpunkte A1, A2, ... der Zulaufstellen bezüglich den Mittelpunkten B1, B2, ... der benachbarten Ablaufstellen jeweils einen mittleren Abstand aufweisen, der für alle diese Mittelpunkte weitgehend gleich gross ist.

Das Flüssigkeit/Gas-Gemisch, das in die Ablauföffnung 20 einströmt, wird - siehe Fig.4 - durch die Umlenkelemente 3, nämlich mit Leitschaufeln 31 versehene Leitwände 30, in eine Wirbelbewegung versetzt. Mit zusätzlichen Elementen 21, die am Rand des Überlaufwehrs 2 angeordnet sind und die die Form von dreieckigen, eingefalteten Flächenstücken haben, lässt sich die Ausbildung der Wirbelbewegung verbessern. Die Elemente 21 können auch gekrümmt und anders geformt, beispielsweise rechteckig, sein. Die Leitschaufeln 31 und damit die Ablaufschächte sind an winkelförmigen Teilen 32 auf dem Boden 100 befestigt.

Bei Bodenkolonnen mit Böden 100, 100' gemäss den Figuren 1 bis 3 weisen alle Böden eine gleiche Anordnung der Schächte auf. Die Schachtanordnungen benachbarter Böden 100 und 100' sind dabei verschieden orientiert und zwar derart, dass sich Versetzungen der Zulaufstellen 10 gegenüber den Ablaufstellen 20 ergeben.

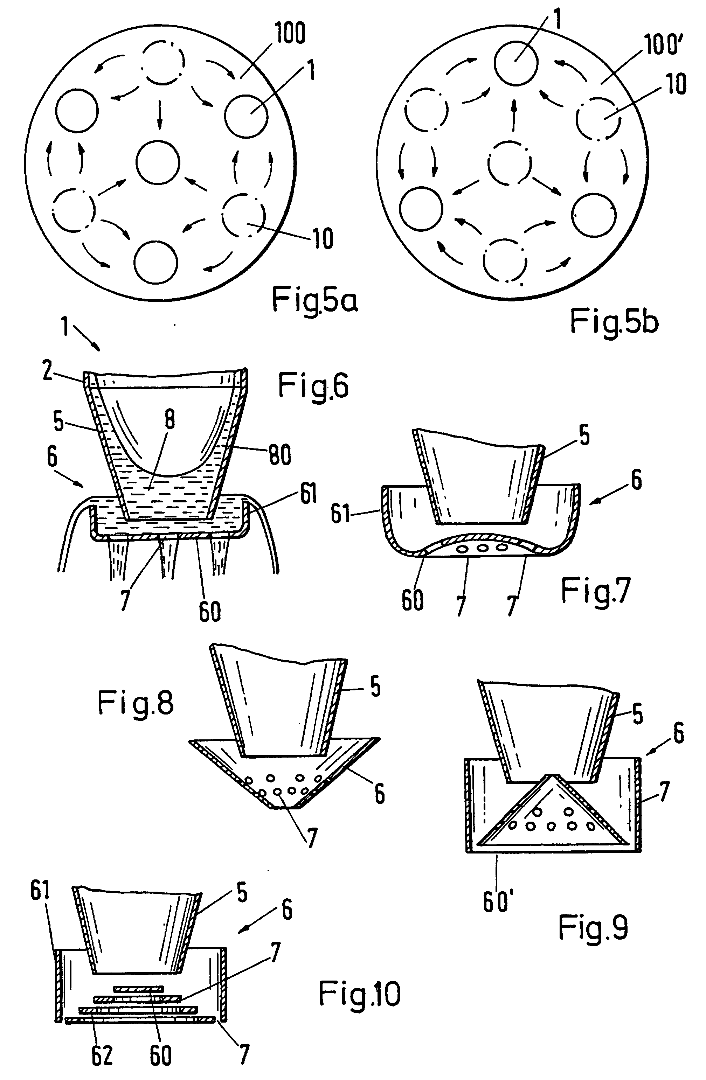

Die Figuren 5a und 5b zeigen die Schachtanordnung für ein weiteres Ausführungsbeispiel: Die Schächte 1 benachbarter Böden 100, 100' sind komplementär angeordnet; die Anzahl der Zulauf- und Ablaufstellen sind pro Boden verschieden gross (4 bzw. 3 Schächte).

Fig.6 zeigt einen Längsschnitt durch den unteren Teil eines erfindungsgemässen Ablaufschachts mit Durchgangsteil 5 und Tasse 6. Die tiefgezogene Tasse 6 weist im mittleren Bereich einen ebenen Boden 60 und an der Peripherie eine zylindrische Wand 61 auf. Die Durchbrüche 7 sind als kreisförmige Löcher ausgebildet. Rücklaufflüssigkeit 8 bewegt sich im Durchgangsteil 5 in Form eines Wirbels, dank dem sich an der Innenwand des Durchgangsteil 5 eine Flüssigkeitslage 80 ausbildet und in dieser der Rücklauf eine durch die Zirkularbewegung verlängerte Verweilzeit hat. Aus der Lage 80 wird mitgeschlepptes Gas - nicht dargestellt - aus dem Rücklauf entfernt, wobei der Trennvorgang durch die wirkende Zentrifugalkraft beschleunigt wird. Die durch die Tasse 6 aufgestaute Flüssigkeit 8 verhindert einen Durchtritt von Gas durch den Ablaufschacht 1. Die Flüssigkeit 8 strömt gleichmässig verteilt durch die Löcher 7 auf den tieferliegenden Boden 100'. Ein Teil der Flüssigkeit 8 kann auch über den Rand der Seitenwand 61 abfliessen. Die Ablauföffnungen 7 für den Rücklauf können beliebige Formen aufweisen.

Fig.7 zeigt ein zweites Ausführungsbeispiel mit einer tiefgezogenen Tasse 6. Der Tassenboden 60 ist hier in der Mitte nach oben gewölbt.

Die Tasse 6 umfasst gemäss den in den Figuren 8 und 9 dargestellten Ausführungbeispielen einen kegel- oder kegelstumpfförmigen Teil, in dem die Durchbrüche 7 angeordnet sind. Sie kann weitgehend durch den kegeloder kegelstumpfförmigen Teil 6 gebildet sein, wobei die Kegelspitze nach unten weist: Fig.8. Die Spitze des kegel- oder kegelstumpfförmigen Teils 60' kann auch nach oben weisen, wenn eine zylindrische Wand 61 die seitliche Begrenzung der Tasse bildet: Fig.9.

Schliesslich zeigt Fig.10 ein Ausführungsbeispiel, bei dem die Tasse 6 ringförmige Bereiche 62 umfasst, zwischen denen schlitzförmige Durchbrüche 7 angeordnet sind.

## Patentansprüche

1. Ablaufschacht (1) zu einer Bodenkolonne (9), welcher bezüglich einer in Kolonnenrichtung weisenden Achse weitgehend zentralsymmetrisch ausgebildet ist, mit einer Ablauföffnung (20), die sich auf einem Boden (100) innerhalb eines Überlaufwehrs (2) befindet und die Umlenkelemente (3) für ein zuströmendes Flüssigkeit/Gas-Gemisch zur Ausbildung einer Zirkularströmung enthält, mit einem Durchgangsteil (5), der zu einem nächsttieferen Boden (100') führt, und mit einer für das Aufstauen von abfliessender Flüssigkeit vorgesehenen Tasse (6) an dem unteren Ende des Durchgangsteils,
**dadurch gekennzeichnet, dass** die Tasse eine Mehrzahl von Durchbrüchen (7) enthält, die derart ausgelegt und angeordnet sind, dass sich eine weitgehend gleichmässige Verteilung der abfliessenden Flüssigkeit auf dem nächsttieferen Boden ergibt.

2. Ablaufschacht nach Anspruch 1, **dadurch gekennzeichnet, dass** die Tasse (6) ein durch Tiefziehen erzeugtes Gefäss ist, über dessen Boden (60) die Durchbrüche (7) regelmässig verteilt sind.

3. Ablaufschacht nach Anspruch 2, **dadurch gekennzeichnet, dass** die Tasse (6) im mittleren Bereich einen ebenen Boden (60) und an der Peripherie eine zylindrische Wand (61) aufweist.

4. Ablaufschacht nach Anspruch 2 oder 3, **dadurch gekennzeichnet, dass** die Durchbrüche (7) als kreisförmige Löcher ausgebildet sind.

5. Ablaufschacht nach Anspruch 1, **dadurch gekennzeichnet, dass** die Tasse (6) einen kegel- oder kegelstumpfförmigen Teil umfasst, in dem die Durchbrüche (7) angeordnet sind, wobei
die Tasse weitgehend durch einen kegel- oder kegelstumpfförmigen Teil gebildet ist, dessen Kegelspitze nach unten weist oder
die Spitze des kegel- oder kegelstumpfförmigen Teils (60') nach oben weist und eine zylindrische Wand (61) die seitliche Begrenzung der Tasse (6) bildet.

6. Ablaufschacht nach Anspruch 1, **dadurch gekennzeichnet, dass** die Tasse (6) ringförmige Bereiche umfasst, zwischen denen schlitzförmige Durchbrüche (7) angeordnet sind.

7. Ablaufschacht nach einem der Ansprüche 1 bis 6, **dadurch gekennzeichnet, dass** die Umlenkelemente (3) durch Teile (31) gebildet sind, die sich am Kamin (4) befinden und/oder durch Teile (21), die an dem Überlaufwehr (2) des Ablaufs angeordnet sind.

8. Bodenkolonne (9) mit Ablaufschächten gemäss einem der Ansprüche 1 bis 7, wobei pro Boden (100) eine Mehrzahl von Schächten (1) vorgesehen ist und Gasdurchtrittsöffnungen für einen Stoffaustausch an allen von Ablaufstellen freien Bereichen der Böden angeordnet sind, **dadurch gekennzeichnet, dass** die Schächte so verteilt sind, dass die Mittelpunkte (A1, A2, ...) von Zulaufstellen (10) bezüglich den Mittelpunkten (B1, B2, ...) der benachbarten Ablaufstellen (20) jeweils einen mittleren Abstand aufweisen, der für alle diese Mittelpunkte weitgehend gleich gross ist, wobei die Zulaufstellen Bereiche auf dem Boden unterhalb der Schächte sind.

9. Kolonne nach Anspruch 8, **dadurch gekennzeichnet, dass** alle Böden (100) eine gleiche Anordnung der Schächte (1) aufweisen, wobei die Anordnungen auf benachbarten Böden verschieden orientiert sind, derart, dass eine Versetzung der Zulaufstellen (10) gegenüber den Ablaufstellen (20) vorliegt.

10. Kolonne nach Anspruch 9, **dadurch gekennzeichnet, dass** die Schächte (1) benachbarter Böden (100, 100') komplementär angeordnet sind und die Anzahl der Zulauf- und Ablaufstellen (10, 20) pro Boden verschieden gross sein können.

## Claims

1. Downcomer (1) for a plate column (9), which is largely centrally symmetrically formed with respect to an axis pointing in the column direction, comprising a downcomer or run-out opening (20) which is located on a plate (100) within an overflow weir (2) and contains the deflection elements (3) for an inflowing liquid/gas mixture for the development of a circular flow, a passage part (5) which leads to a next lower plate (100') and a cup (6) at the lower end of the passage part for the accumulation of liquid flowing off **characterised in that** the cup contains a plurality of apertures (7) which are designed and arranged in such a manner that a largely uniform distribution of the liquid flowing away to the next lower plate results.

2. Downcomer in accordance with claim 1 **characterised in that** the cup (6) is a vessel which is produced by deep drawing, with the openings (7) being regularly distributed over its base (60).

3. Downcomer in accordance with claim 2 **characterised in that** the cup (6) has a planar base (60) in its middle region and a cylindrical wall (61) at its periphery.

4. Downcomer in accordance with claim 2 or claim 3 **characterised in that** the apertures (7) are executed as circular holes.

5. Downcomer in accordance with claim 1 **characterised in that** the cup (6) comprises a part in the shape of a cone or a truncated cone in which the openings (7) are arranged, with
the cup being largely formed by the part in the shape of a cone or of a truncated cone, the cone apex of which points downward or
the apex of the part in the shape of a cone or a truncated cone (60') pointing upward and a cylindrical wall (61) forming the lateral boundary of the cup (6).

6. Downcomer in accordance with claim 1 **characterised in that** the cup (6) comprises ring-shaped regions between which slit-shaped apertures (7) are arranged.

7. Downcomer in accordance with one of the claims 1 to 6 **characterised in that** the deflection elements (3) are formed by parts (31) which are located at the chimney (4) and/or by parts (21) which are arranged at the overflow weir (2) of the run-out.

8. Plate column (9) with downcomers in accordance with one of the claims 1 to 7, with a plurality of shafts (1) being provided per plate (100) and with gas passage apertures for an exchange of material being arranged at all regions which are free of run-out points, **characterised in that** the shafts are distributed in such a manner that the midpoints (A1, A2, ...) of the approach points (10) have an average spacing in each case with respect to the midpoints (B1, B2, ...) of the adjacent run-out points (20) which is largely of the same size for all these midpoints, with the approach points being regions on the plate beneath the shafts.

9. Column in accordance with claim 8 **characterised in that** all plates (100) have a similar arrangement of the shafts (1), with the arrangements on adjacent plates being oriented differently in such a manner that a staggering of the approach points (10) with respect to the run-out points (20) is present.

10. Column in accordance with claim 9 **characterised in that** the shafts (1) of adjacent plates (100, 100') are arranged to be complementary; and **in that** the number of the approach and run-out points (10, 20) per plate can be different.

## Revendications

1. Tube d'évacuation (1) vers une colonne à plateaux (9), qui est réalisé relativement à un axe orienté dans la direction de la colonne sensiblement d'une manière centrale symétrique, avec une ouverture d'écoulement (20) qui se trouve sur un plateau (100) à l'intérieur d'un déversoir de trop-plein (2) et qui comprend des éléments de renvoi (3) pour un mélange liquide/gaz affluant pour former un flux circulaire, avec une partie de passage (5) qui mène à un plateau suivant plus bas (100'), et avec une tasse (6) prévue pour l'accumulation du liquide qui s'écoule à l'extrémité inférieure de la partie de passage, **caractérisé en ce que** la tasse comprend une multitude de perçages (7) qui sont conçus et agencés de façon à obtenir une répartition sensiblement uniforme du liquide qui s'écoule sur le fond suivant plus bas.

2. Tube d'évacuation selon la revendication 1, **caractérisé en ce que** la tasse (6) est un récipient réalisé par emboutissage profond, sur le fond (60) duquel les perçages (7) sont répartis uniformément.

3. Tube d'évacuation selon la revendication 2, **caractérisé en ce que** la tasse (6) présente dans la zone médiane un fond plan (60) et à la périphérie une paroi cylindrique (61).

4. Tube d'évacuation selon la revendication 2 ou 3, **caractérisé en ce que** les perçages (7) sont réalisés sous forme de trous circulaires.

5. Tube d'évacuation selon la revendication 1, **caractérisé en ce que** la tasse (6) présente une partie conique ou tronconique dans laquelle sont ménagés les perçages (7), où la tasse est formée dans une grande mesure par une partie conique ou tronconique dont la pointe de cône orientée vers le bas ou la pointe de la partie conique ou tronconique (60') est orientée vers le haut, et une paroi cylindrique (61) forme la délimitation latérale de la tasse (6).

6. Tube d'évacuation selon la revendication 1, **caractérisé en ce que** la tasse (6) comprend des zones annulaires entre lesquelles sont ménagés des perçages (7) en forme de fente.

7. Tube d'évacuation selon l'une des revendications 1 à 6, **caractérisé en ce que** les éléments de renvoi (3) sont formés par des parties (31) qui se trouvent à la cheminée (4) et/ou par des parties (21) qui sont disposées au déversoir de trop-plein (2) de l'évacuation.

8. Colonne à plateaux (9) avec des tubes d'évacuation selon l'une des revendications 1 à 7, où est prévue par plateau (100) une multitude de tubes (1) et où des ouvertures de passage de gaz pour un échange de matière sont disposées à toutes les zones des fonds exemptes d'emplacements d'écoulement, **caractérisée en ce que** les tubes sont répartis de façon que les points centraux (A1, A2, ...) d'emplacements d'afflux (10) présentent relativement aux points centraux (B1, B2, ...) des emplacements d'écoulement avoisinants (20) respectivement un écart moyen qui est sensiblement de même grandeur pour tous ces points centraux, où les emplacements d'afflux sont des zones sur le fond en dessous des tubes.

9. Colonne selon la revendication 8, **caractérisée en ce que** tous les plateaux (100) présentent un même agencement des tubes (1), où les agencements sur des plateaux avoisinants sont orientés différemment de telle sorte qu'il y a un décalage des emplacements d'afflux (10) par rapport aux emplacements d'écoulement (20).

10. Colonne selon la revendication 9, **caractérisée en ce que** les tubes (1) de plateaux avoisinants (100, 100') sont disposés d'une façon complémentaire et que le nombre des emplacements d'afflux et d'écoulement (10, 20) par fond peut être différent.
